Europäisches Patentamt

European Patent Office

Office européen des brevets

(11) Publication number: 0 387 044 A1

# EUROPEAN PATENT APPLICATION

(21) Application number: 90302453.7

(22) Date of filing: 07.03.90

(51) Int. Cl.5: B01D 53/36

(30) Priority: 07.03.89 JP 55796/89
09.03.89 JP 57259/89

(43) Date of publication of application:
12.09.90 Bulletin 90/37

(84) Designated Contracting States:
DE FR GB IT NL

(71) Applicant: SAKAI CHEMICAL INDUSTRY CO.,
LTD.,
1, Ebisujimacho 5-cho
Sakai Osaka(JP)

(72) Inventor: Yoshimoto, Masafumi
1, Ebisujimacho 5-cho
Sakai, Osaka(JP)
Inventor: Nakatsuji, Tadao
1, Ebisujimacho 5-cho
Sakai, Osaka(JP)
Inventor: Nagano, Kazuhiko
1, Ebisujimacho 5-cho
Sakai, Osaka(JP)

(74) Representative: Geering, Keith Edwin et al
REDDIE & GROSE 16 Theobalds Road
London WC1X 8PL(GB)

(54) Catalyst and method for ozone decomposition.

(57) There is disclosed an ozone decomposition catalyst which comprises:
a zeolite represented by the general formula (I)
$M_{X/n} \cdot [(AlO_2)_X \cdot (SiO_2)_Y] \cdot mH_2O$
wherein M is an alkali metal or an alkaline earth metal, and n is a valency of the metal M; and
a metal or a metal oxide of which oxide formation enthalpy $-\Delta H^\circ f$ is not more than 100 Kcal/g-atom of oxygen.
A further ozone decomposition catalyst is disclosed which comprises:
a metal substituted zeolite represented by the general formula (II)
$M^1_{a/n} H_b M^2_{(X-(a/n)-b)} \cdot [(AlO_2)_X \cdot (SiO_2)_Y] \cdot mH_2O$
wherein $M^1$ is a metal of which oxide formation enthalpy $-\Delta H^\circ f$ is not more than 100 Kcal/g-atom of oxygen, $M^2$ is K or Na, and $0 \leq b < X$.

# CATALYST AND METHOD FOR OZONE DECOMPOSITION

This invention relates to a catalyst and a method for decomposing ozone contained, for example, in the air.

There has been proposed various methods of decomposing noxious ozone contained in the air, for example, an adsorption method wherein a porous material is used such as activated carbon or zeolite, or an oxidative decomposition method wherein a catalyst is used such as manganese dioxide.

However, the above mentioned known methods of ozone decomposition are not satisfactory ones. The adsorption method has a disadvantage in that an adsorbent must be very often regenerated since it is limited in adsorption ability. Therefore, the working is laborious and costs a great deal. The oxidative decomposition method has no such disadvantages as above described, but the known catalysts have insufficient decomposition activity for ozone, but also deteriorate in activity very soon when they are used under severe conditions, for example, when a gas which contains high concentrations of ozone is treated or a gas is treated with a high area velocity.

It is, therefore, an object of the invention to provide an ozone decomposition catalyst which is higher in ozone decomposition activity but also more durable under severe raction conditions than the known catalysts,

In accordance with the invention, there is provided an ozone decomposition catalyst which comprises:
a zeolite represented by the general formula (I)
$$M_{x/n} \cdot [(AlO_2)_x \cdot (SiO_2)_y] \cdot mH_2O$$
wherein M is an alkali metal or an alkaline earth metal, and n is a valency of the metal M; and
a metal or a metal oxide of which oxide formation enthalpy $-\Delta H^\circ f$ is not more than 100 Kcal/g-atom of oxygen.

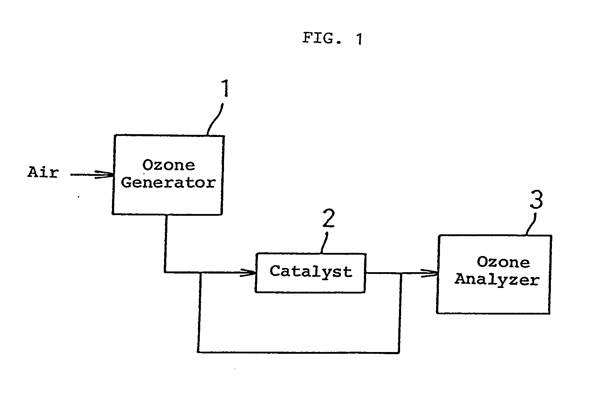

Fig. 1 is a diagram for measurement of ozone decomposition activity of catalyst.

Herein the specification, the term, catalyst, means active components which have ozone decomposition activity, and the term, catalyst, is a synonym of active components. The catalyst is usually supported on a carrier to form a catalyst structure, or is molded into a mold structure together with other molding components, for practical use. These structures will be referred to as catalyst structures.

There may be mentioed as zeolite represented by the general formula (I) , for example, natural zeolites such as analcime, faujasite, chabazite, natrolite, phillipsite or mordenite, and synthesized zeolites such as zeloite-X, zeolite-Y, zeolite-A or ZSM-5. Among these a zeolite having a high $Al_2O_3/SiO_2$ ratio is preferred, and zeolite-A is in particular preferred.

In the invention, there may be preferably used commercially available synthesized zeolites, for example, zeolite KA-100P, NA-100P or GA-100P as zeolite-A, zeolite NX-100P or CX-100P as zeolite-X, or NP-100 as mordenite type zeolite. All of these zeolites are available from Nippon Kagaku Kogyo K.K.

The catalyst of the invention contains a metal or an oxide of a metal of which oxide formation enthalpy $-\Delta H^\circ f$ is not more than 100 Kcal/g-atom of oxygen together with the zeolite. There may be mentioned as such oxides, for example, $Cr_2O_3$ or ZnO of which formation enthalpy $-\Delta H^\circ f$ is in the range of 80-100 Kcal/g-atom of oxygen, $V_2O_5$, $WO_3$, $Fe_2O_3$, $MnO_2$ or $MoO_3$ in the range of 60-80 Kcal/g-atom of oxygen, NiO, $Co_3O_4$ or $RuO_2$ in the range of 40-60 Kcal/g-atom of oxygen, and CuO, $Rh_2O_3$, PdO, $Ag_2O$ or $PtO_2$ of which formation enthalpy $-\Delta H^\circ f$ is not more than 40 Kcal/g-atom of oxygen.

Among the above mentioned, $Cr_2O_3$, $Fe_2O_3$, $MnO_2$, $Co_3O_4$, $RuO_2$, CuO, $Rh_2O_3$, PdO, $Ag_2O$ or $PtO_2$ is preferred. The metal or oxide may be used singly or as a mixture of two or more. A mixture of $MnO_2$ and $Ag_2O$ is a preferred example.

The catalyst of the invention may be produced by a method below described. At first, the zeolite represented by the general formula (I) is repulped in water to form a slurry of a concentration of about 10 g/l, and a salt of a metal of which oxide formation enthalpy $-\Delta H^\circ f$ is not more than 100 Kcal/g-atom of oxygen, such as a nitrate or an acetate, although not limited thereto, is added to the slurry, followed by stirring. Then, an alklai such as ammonia water or an aqueous solution of an alkali metal hydroxide or an alkaline earth metal hydroxide is added to the mixture to neutralize the mixture to a pH of about 7, to form precipitates of the metal. The precipitate is then fully washed with water, dried and calcined to provide a catalyst of the invention which contains the metal or metal oxide together with the zeolite.

The calcination is carried out at a temperature of 200-500$^\circ$C , preferably of 300-400$^\circ$C . When the calcination temperature is less than 300$^\circ$C , water of crystallization is insufticiently removed from the precipitate of metal, to fail to provide a catalyst of the invention. However, the calcination at temperatures of more than 500$^\circ$C may undesirably cause destruction of the structure of zeolite, in particular, of zeolite-A.

The metal or metal oxide is contained in the catalyst in amounts of 5-30 % by weight in terms of oxides. When the amount of the metal or metal oxide is less than 5 % by weight in terms of oxides, the resultant catalyst has a small activity of ozone decomposition. However, if the amount is more than 30 % by weight, no additional increase in acitivity is attained.

Further in accordance with the invention, there is provided a catalyst for ozone decomposition which comprises: a metal substituted zeolite represented by the general formula (II) of

$$M^1{}_{a/n}H_bM^2{}_{(X-(a/n)-b)} \cdot [(AlO_2)_x \cdot (SiO_2)_Y] \cdot mH_2O$$

wherein $M^1$ is a metal of which oxide formation enthalpy $-\Delta H^{\circ}f$ is not more than 100 Kcal/g-atom of oxygen, $M^2$ is K or Na, and $0 \leq b < X$.

In the above formula (II), the metal $M^1$ is a substituent metal which has substituted the metal $M^2$ in a zeolite and has an oxide formation enthalpy $-\Delta H^{\circ}f$ of not more than 100 Kcal/g-atom of oxygen. Preferred examples of the metals are hereinbefore described, and include Cr, Zn, V, W, Fe, Mn, Mo, Ni, Co, Ru, Cu, Rh, Pd, Ag or Pt.

It is generally accepted that the ozone decomposition reaction proceeds as follows when $M^1$ is taken as an active site:

$$O_3 + -M^1- \rightarrow - \underset{\underset{O}{|}}{M^1}- + O_2 \qquad (1)$$

$$O_3 + - \underset{\underset{O}{|}}{M^1}- \rightarrow -M^1- + 2O_2 \qquad (2)$$

The reaction (1) is $M^1$-O formation reaction, and the more the enthalpy $-\Delta H^{\circ}f$ of formation of the oxide of $M^1$, the more readily the reaction proceeds, whereas the reaction (2) is $M^1$-O dissociation reaction, and the less the enthalpy $-\Delta H^{\circ}f$ of formation of the oxide of $M^1$, the more readily the reaction proceeds, and it is known that the reaction (2) is the rate determining step of the ozone decomposition reaction. Thus, according to the invention, the metal $M^1$ is limited to have an oxide formation enthalpy $-\Delta H^{\circ}f$ of not more than 100 Kcal/g-atom of oxygen, so that a high activity catalyst is obtained.

The metal substituted zeolite represented by the general formula (II) is obtained by substituting $M^2$, i.e., potassium or sodium, in such a zeolite as mentioned before, for the metal $M^1$ partly or wholly. More specifically, the metal substituted zeolite as the catalyst of the invention may be produced, for instance, by immersing the zeolite in a solution of ions of the metal $M^1$ at room temperatures or elevated temperatures, if necessary repeatedly, until desired substitution is completed.

The zeolite usable are described hereinbefore, and includes, for example, natural zeolites such as analcime, faujasite, chabazite, natrolite, phillipsite or mordenite, and synthesized zeolites such as zeloite-X, zeolite-Y, zeolite-A or ZSM-5. Among these a zeolite having a high $Al_2O_3/SiO_2$ ratio is preferred, and zeolite-A is especially preferred.

There may be preferably used commercially available synthesized zeolites, for example, zeolite KA-100P, NA-100P or GA-100P as zeolite-A, zeolite NX-100P or CX-100P as zeolite-X, or NP-100 as mordenite type zeolite. All of these zeolites are available from Nippon Kagaku Kogyo K.K.

Mordenite and ZSM-5 have not so many substituting sites, namely about two thirds of zeolite-A, but they are highly resitant to acids, so that a solution of high concentrations of the metal ions may be used in the metal substitution in zeolites. On the contrary, zeolite-A, X and Y have many substituting sites, but they are of poor resistant to acids, so that it is necessary that the zeolite is repeatedly immersed in a low concentration solution of the metal ions to obtain a desired metal substitution rate.

According to the invention, the more the metal substitution, the higher the activity of the resultant cataslyst. Usually, substitution rates of not less than 20 % for zeolite-A, X or Y, and of not less than 30 % for mordeniteand ZSM-5, provide a catalyst having a high ozone decomposition activity.

The catalyst or active components as set forth above is usually supported on an inactive carrier material to form a catalyst structure suitable for practical use. By way of example, the catalyst is obtained as powder and made into a slurry wi th water, and a honeycomb carrier is immersed in the slurry, and dried, to provide a honeycomb catalyst structure. As a further method, the catalyst is kneaded together with inactive ceramic powder as a carrier material, molding assistants to provide the catalyst with plasiticity, reinforcements such as inorganic fibers to improve mechanical strength of the resultant structure and organic binders, and the mixture is then molded into a structure such as a honeycomb.

Therefore, the catalyst structure is not specifically limited in form, and may be in the form of honeycomb, pellet, cylinder, plate or pipe.

The entire catalyst structure may be composed of the active components, but when carrier structures or reinforcements are used to produce catalyst structures, it is preferred that the catalyst structure contains the active components preferably in amounts of not less than 50 %, more preferably in amounts of not less than 75 %, supported thereon.

The ozone decomposition may be carried out by putting a reactant gas which contains ozone there in into contact with the catalyst, thereby to catalytically decompose the ozone.

The ozone decomposition may be carried out at temperatures of 0-40°C , preferably of 10-30°C. When the reaction temperature is less than 0°C, the reaction velocity is infeasibly slow. However, heat energy is needed when the reaction is carried out at temperatures of more than 40°C , and moreover, little improvement in decomposition rate is attained, so that reaction at high temperatures is undesirable mainly from the standpoint of energy economy.

A reactant gas which contains ozone is put into contact with the catalyst preferably at an area velocity ($m^3/m^2 \cdot hr$) of 5-50, wherein the area velocity is defined as the value of space velocity ($hr^{-1}$) divided by gas contact area per unit volume ($m^2/m^3$) of catalyst. When the area velocity is less than 5, a large volume of catalyst is undesirably needed whereas when more than 50, ozone is not sufficiently decomposed and decomposition rate is very small.

The known catalysts do not substantially deteriorate in activity when they are used to decompose ozone under mild conditions of a small CA value which is defined as the product of ozone concentration (ppm) at an inlet of a reactor and area velocity. However, many known catalysts rapidly deteriorate when the reaction is carried out under severe conditions of a CA value of not less than 30. However, the catalysts of the invention do not substantially deteriorate in activity even when it is used under severe conditions of a large CA value of not less than 30.

The catalyst of the invention has a high activity for ozone decomposition and durable even when it is used under severe conditions.

The invention will now be described in more detail with reference to examples, however, the invention is not limited thereto.

In the examples, preparation of catalysts will be described. The thus prepared catalyst is made into a slurry, and a honeycomb formed with corrugates of ceramic fibers and having a porosity of 81 % and a pitch of 4.0 mm is immersed in the slurry, and dried to provide a catalyst structure having the catalyst supported thereon in a support ratio of 95-105 %. The support ratio is defined as:

$$\frac{\text{Weight of Catalyst Supported on the Honeycomb}}{\text{Weight of the Honeycomb}} \times 100 \ (\%)$$

I. Catalysts Composed Of Zeolite And Metals Or Metal Oxides

A. Preparation of Catalysts

Example 1

An amount of 200 g of mordeni te represented by $Na_x[(AlO_2)_x \cdot (SiO_2)_y] \cdot mH_2O$ and having an Y/X ratio of 6.3 (NM-100P by Nippon Kagaku Kogyo K.K.) was dispersed in two liters of water to form a slurry. An aqueous solution of chromium nitrate was added to the slurry, and the mixture was stirred and then neutralized with a 14 % by weight ammonia water to a pH of 7.0.

The slurry was filtered, washed with water, dried at 100°C for eight hours and calcined at 400°C for two hours, to provide a mordenite powder containing chromium in amounts of 5 % by weight, 10 % by weight and 15 % by weight, in terms of oxides, respectively.

Example 2

An amount of 200 g of zeolite-A represented by $Na_x[(AlO_2)_x \cdot (SiO_2)_y] \cdot mH_2O$ and having an Y/X ratio of 1.0 (NA-100P by Nippon Kagaku Kogyo K.K.) was dispersed in two liters of water to form a slurry. An aqueous solution of manganese acetate was added to the slurry, and the mixture was stirred and then neutralized with a 14 % by weight ammonia water to a pH of 7.0.

The slurry was filtered, washed with water, dried at 100°C for eight hours and calcined at 300°C for two hours, to provide a zeolite-A powder containing manganese in amounts of 5 % by weight and 10 % by weight in terms of oxides, respectively.

Example 3

An aqueous solution of cobalt acetate was used in place of the aqueous solution of manganese acetate, and otherwise in the same manner as in Example 2, a zeolite-A powder was prepared which contained cobalt in amounts of 10 % by weight in terms of oxides.

Example 4

An aqueous solution of ferric acetate was used in place of the aqueous solution of manganese acetate, and otherwise in the same manner as in Example 2, a zeolite-A powder was prepared which contained iron in amounts of 10 % by weight in terms of oxides.

Example 5

An aqueous solution of cupric acetate was used in place of the aqueous solution of manganese acetate, and otherwise in the same manner as in Example 2, a zeolite-A powder was prepared which contained copper in amounts of 10 % by weight in terms of oxides.

Example 6

An aqueous solution of silver nitrate was used in place of the aqueous solution of manganese acetate, and otherwise in the same manner as in Example 2, a zeolite-A powder was prepared which contained silver in amounts of 10 % by weight in terms of oxides.

Example 7

An aqueous solution of silver nitrate was used together with an aqueous solution of manganese acetate, and a 10 % by weight aqueous solution of sodium hydroxide was used as an alkali, and otherwise in the same manner as in Example 2, a zeolite-A powder was prepared which contained silver and manganese in amounts of 3 % by weight and 7 % by weight in terms of oxides, respectively.

Comparative Example 1

An amount of 30 g of manganese dioxide having a specific surface area of 48 $m^2/g$ and 70 g of a mixture of titanium tetrachloride and silica sol (1/1 in a weight ratio as $TiO_2/SiO_2$) were mixed together under stirring while ammonia gas was blown thereinto to neutralize the mixture and provide slurry precipitates.

After fully washing with water, the precipitate was calcined at a temperature of 500°C for three hours, to provide a ternary catalyst of $MnO_2/TiO_2/SiO_2$ (30/35/35 in a weight ratio) of a specific surface area of 162 $m^2/g$.

B. Measurement of Catalyst Activity

The activity of the catalysts prepared in the Examples 1-7 and the Comparative Examples 1 was measured. As shown in Fig. 1, air is introduced into an ozone generator 1 to generate air which contains ozone in an appropriate concentration. The air is then sent to a catalyst reactor 2 to catalytically decompose the ozone in the reactor. The ozone concentration in the air is determined with an ozone analyzer 3 at the inlet and the outlet of the reactor. Ozone decomposition rate (%) is calculated based on an expression:

$$\frac{\text{Ozone Concentration at Inlet} - \text{Ozone Concentration at Outlet}}{\text{Ozone Concentration at Inlet}}$$

$$\times 100 \ (\%).$$

The reaction was carried out at a temperature of $20°C$ with varied ozone concentrations at the inlet of the reactor and area velocities so that CA values were 10, 30 and 50, respectively. The ozone decomposition rate was measured at the initial stage, after one hour and two hours, respectively.

The results are shown in the Table 1. As apparent from the results, the catalysts prepared in the Examples 1-7 were found higher in ozone decomposition acitivity and more durable under the severe reaction conditions than the catalyst in the Comparative Example 1.

TABLE 1

| | Catalysts | | Reaction Conditions | | |
|---|---|---|---|---|---|
| | Metal Oxides | Amounts (wt. %) | CA* | Ozone Concentration at inlet (ppm) | Area Velocity $(m^3/m^2 \cdot hr)$ |
| Example 1 | $Cr_2O_3$ | 5 | 30 | 1 | 30 |
| | | 10 | 10 | 1 | 10 |
| | | | | 5 | 2 |
| | | | | 10 | 1 |
| | | | 30 | 1 | 30 |
| | | | | 5 | 6 |
| | | | | 10 | 3 |
| | | | 50 | 1 | 50 |
| | | | | 5 | 10 |
| | | 15 | 30 | 1 | 30 |
| | | | | 5 | 6 |
| | | | | 10 | 3 |
| Example 2 | $MnO_2$ | 5 | 30 | 1 | 30 |
| | | 10 | 30 | 1 | 30 |
| Example 3 | $Co_3O_4$ | 10 | 30 | 1 | 30 |
| Example 4 | $Fe_2O_3$ | 10 | 30 | 1 | 30 |
| Example 5 | $CuO$ | 10 | 30 | 1 | 30 |
| Example 6 | $Ag_2O$ | 10 | 30 | 1 | 30 |
| Example 7 | $Ag_2O/MnO_2$ | 3/7 | 30 | 1 | 30 |

*) $ppm \cdot m^3/m^2 \cdot hr$

TABLE 1 (Continued)

| | Ozone Decomposition Rate | | |
| --- | --- | --- | --- |
| | | After | |
| | Initial | 1 hour | 2 hours |
| | | (%) | |
| Example 1 | 90.1 | 90.0 | 90.1 |
| | 99.9 | 100 | 99.1 |
| | 100 | 100 | 100 |
| | 100 | 100 | 100 |
| | 93.9 | 93.8 | 93.8 |
| | 100 | 100 | 100 |
| | 100 | 100 | 100 |
| | 80.6 | 80.7 | 80.7 |
| | 100 | 100 | 100 |
| | 94.4 | 94.3 | 94.3 |
| | 100 | 100 | 100 |
| | 100 | 100 | 100 |
| Example 2 | 95.8 | 95.9 | 95.8 |
| | 95.1 | 95.0 | 94.9 |
| Example 3 | 91.8 | 91.9 | 91.7 |
| Example 4 | 90.4 | 90.6 | 90.5 |
| Example 5 | 94.1 | 94.3 | 94.1 |
| Example 6 | 96.6 | 96.7 | 96.6 |
| Example 7 | 97.9 | 98.0 | 98.0 |

TABLE 1 (Continued)

| | CA* | Reaction Conditions | |
| | | Ozone Concentration at Inlet | Area Velocity |
| | | (ppm) | (m³/m²·hr) |
|---|---|---|---|
| Compara. 1 | 10 | 1 | 10 |
| | | 5 | 2 |
| | | 10 | 1 |
| | 30 | 1 | 30 |
| | | 5 | 6 |
| | | 10 | 3 |
| | 50 | 1 | 50 |
| | | 5 | 10 |
| | | 10 | 5 |

*) ppm·m³/m²·hr

TABLE 1 (Continued)

| | Ozone Decomposition Rate | | |
| | Initial | After | |
| | | 1 hour | 2 hours |
| | | (%) | |
|---|---|---|---|
| Compara. 1 | 99.2 | 76.7 | 58.3 |
| | 100 | 99.9 | 98.7 |
| | 100 | 100 | 99.9 |
| | 80.2 | 38.5 | 25.3 |
| | 100 | 91.2 | 76.7 |
| | 100 | 99.2 | 94.5 |
| | 62.2 | 25.3 | 16.1 |
| | 100 | 76.7 | 58.3 |
| | 100 | 94.6 | 82.6 |

II. Catalysts Composed of Metal Substituted Zeolite

## A. Preparation of Catalysts

### Example 1

An amount of 500 g of mordenite represented by $Na_x[(AlO_2)_x \cdot (SiO_2)_Y] \cdot mH_2O$ and having an Y/X ratio of 6.3 (NM-100P by Nippon Kagaku Kogyo K.K.) was immersed in five liters of a 0.5 mole/l aqueous solution of chromium nitrate in a three necked flask provided with a refluxing condenser, and the mixture was stirred at temperatures of 90-100° C for five hours, followed by separation of solids by filtration.

After repeating the operations, there was prepared a chromium substitured mordenite powder represented by the formula of $Cr_{a/3}H_bNa_{(X-(a/3)-b)}[(AlO_2)_x \cdot (SiO_2)_Y] \cdot mH_2O$ and having substitution rates of 0.21, 0.34 and 0.57, respectively.

### Example 2

An amount of 500 g of zeolite-A represented by $Na_x[(AlO_2)_x \cdot (SiO_2)_Y] \cdot mH_2O$ and having an Y/X ratio of 1.0 (NA-100P by Nippon Kagaku Kogyo K.K.) was immersed in five liters of a 0.5 mole/l aqueous solution of manganese acetate, and the mixture was stirred at room temperaturess for five hours, followed by separation of solids by filtration.

After repeating the operations, there was prepared a manganese substituted zeolite-A powder represented by the formula of $Mn_{a/4}H_bNa_{(X-(a/4)-b)}[(AlO_2)_x \cdot (SiO_2)_Y] \cdot mH_2O$ and having substitution rates of 0.23 and 0.49, respectively.

### Example 3

A 0.1 mole/l aqueous solution of cobalt acetate was used in place of the manganese acetate solution, and otherwise in the same manner as in the Example 2, there was prepared a cobalt substituted zeolite-A powder represented by the formula of $Co_{3a/8}H_bNa_{(X-(3a/8)-b)}[(AlO_2)_x \cdot (SiO_2)_Y] \cdot mH_2O$ and having a substitution rate of 0.44.

### Example 4

A 0.1 mole/l aqueous solution of ferric nitrate was used in place of the manganese acetate solution, and otherwise in the same manner as in the Example 2, there was prepared an iron substituted zeolite-A powder represented by the formula of $Fe_{a/3}H_bNa_{(X-(a/3)-b)}[(AlO_2)_x \cdot (SiO_2)_Y] \cdot mH_2O$ and having a substitution rate of 0.35.

### Example 5

A 0.1 mole/l aqueous solution of cupric acetate was used in place of the manganese acetate solution, and other wise in the same manner as in the Example 2, there was prepared a copper substitute zeolite-A powder represented by the formula of $Cu_{a/2}H_bNa_{(X-(a/2)-b)}[(AlO_2)_x \cdot (SiO_2)_Y] \cdot mH_2O$ and having a substitution rate of 0.41.

### Example 6

A 0.1 mole/l aqueous solution of silver nitrate was used in place of the manganese acetate solution, and otherwise in the same manner as in the Example 2, there was prepared a silver substituted zeolite-A powder represented by the formula of $Ag_aH_bNa_{(X-a-b)}[(AlO_2)_x \cdot (SiO_2)_Y] \cdot mH_2O$ and having a substitution rate of 0.27.

Example 7

A 0.02 mole/l aqueous solution of silver nitrate was used together with a 0.08 mole/l aqueous solution of manganese acetate solution, and otherwise in the same manner as in the Example 2, there was prepared a manganese-silver substituted zeolite-A powder represented by the formula of $Mn_{0.8a/4}Ag_{0.2a}H_bNa_{(x-(2a/5)-b)}[(AlO_2)_x \cdot (SiO_2)_y] \cdot mH_2O$ and having a substitution rate of 0.38.

Example 8

A 0.1 mole/l aqueous solution of palladium chloride was used in place of the manganese acetate solution, and other wise in the same manner as in the Example 2, there was prepared a palladium substituted zeolite-A powder represented by the formula of $Pd_{a/3}H_bNa_{(x-(a/3)-b)}[(AlO_2)_x \cdot (SiO_2)_y] \cdot mH_2O$ and having a substitution rate of 0.19.

### B. Measurement of Catalyst Activity

The activity of the catalysts prepared in the Examples 1-8 was measured in the same manner as hereinbefore described.

The results are shown in the Table 2. As apparent from the results, the catalysts prepared in the Examples 1-8 were found higher in ozone decomposition acitivity and more durable under the severe reaction conditions than the conventional catalyst.

TABLE 2

| | Substitution Rate | Reaction Conditions | | |
|---|---|---|---|---|
| | | CA* | Ozone Concentration at Inlet (ppm) | Area Velocity ($m^3/m^2 \cdot hr$) |
| Example 1 | 0.21 | 30 | 1 | 30 |
| | 0.34 | 10 | 1 | 10 |
| | | | 5 | 2 |
| | | | 10 | 1 |
| | | 30 | 1 | 30 |
| | | | 5 | 6 |
| | | | 10 | 3 |
| | | 50 | 1 | 50 |
| | | | 5 | 10 |
| | 0.57 | 30 | 1 | 30 |
| | | | 5 | 6 |
| | | | 10 | 3 |
| Example 2 | 0.23 | 30 | 1 | 30 |
| | 0.49 | 30 | 1 | 30 |
| Example 3 | 0.44 | 30 | 1 | 30 |
| Example 4 | 0.35 | 30 | 1 | 30 |
| Example 5 | 0.41 | 30 | 1 | 30 |
| Example 6 | 0.27 | 30 | 1 | 30 |
| Example 7 | 0.38 | 30 | 1 | 30 |
| Example 8 | 0.19 | 30 | 1 | 30 |

*) $ppm \cdot m^3/m^2 \cdot hr$

## TABLE 2 (Continued)

| | Ozone Decomposition Rate | | |
| | | After | |
| | Initial | 1 hour | 2 hours |
| | | (%) | |
| Example 1 | 91.2 | 91.3 | 91.6 |
| | 100 | 100 | 100 |
| | 100 | 100 | 100 |
| | 100 | 100 | 100 |
| | 93.0 | 93.6 | 93.1 |
| | 99.8 | 99.8 | 99.8 |
| | 100 | 100 | 100 |
| | 79.7 | 80.2 | 79.9 |
| | 100 | 100 | 100 |
| | 93.2 | 93.2 | 93.0 |
| | 99.8 | 99.8 | 99.8 |
| | 100 | 100 | 100 |
| Example 2 | 94.4 | 94.2 | 94.7 |
| | 95.2 | 95.8 | 95.3 |
| Example 3 | 92.8 | 92.9 | 93.0 |
| Example 4 | 91.1 | 90.9 | 90.3 |
| Example 5 | 93.1 | 93.4 | 93.8 |
| Example 6 | 95.6 | 95.7 | 96.1 |
| Example 7 | 96.8 | 96.7 | 96.9 |
| Example 8 | 93.3 | 93.0 | 93.2 |

**Claims**

1. An ozone decomposition catalyst which comprises:
a zeolite represented by the general formula (I)

$M_{x/n} \cdot [(AlO_2)_x \cdot (SiO_2)_y] \cdot mH_2O$

wherein M is an alkali metal or an alkaline earth metal, and n is a valency of the metal M; and a metal or a metal oxide of which oxide formation enthalpy $-\Delta H°f$ is not more than 100 Kcal/g-atom of oxygen.

2. The ozone decomposition catalyst as claimed in claim 1 wherein the metal oxide is $Cr_2O_3$, ZnO, $V_2O_5$, $WO_3$, $Fe_2O_3$, $MnO_2$, $MoO_3$, NiO, $Co_3O_4$, $RuO_2$, CuO, $Rh_2O_3$, PdO, $Ag_2O$ or $PtO_2$.

3. The ozone decomposition catalyst as claimed in claim 1 wherein the metal or the metal oxide is contained in an amount of 5-30 % by weight based on the catalyst.

4. An ozone decomposition catalyst which comprises:
a metal substituted zeolite represented by the general formula (II)

$M^1_{a/n}H_bM^2_{(X-(a/n)-b)} \cdot [(AlO_2)_x \cdot (SiO_2)_Y] \cdot mH_2O$

wherein $M^1$ is a metal of which oxide formation enthalpy $-\Delta H^\circ f$ is not more than 100 Kcal/g-atom of oxygen, $M^2$ is K or Na, and $0 \leqq b < X$.

5. The ozone decomposition catalyst as claimed in claim 4 wherein the metal is Cr, Zn, V, W, Fe, Mn, Mo, Ni, Co, Ru, Cu, Rh, Pd, Ag or Pt.

6. The ozone decomposition catalyst as claimed in claim 4 wherein the metal substituted zeolite is a metal substituted A-, X- or Y-zeolite, and the metal $M^2$ has been substituted by the metal $M^1$ in a substitution rate of not less than 20 %.

7. The ozone decomposition catalyst as claimed in claim 4 wherein the metal substituted zeolite is a metal substituted mordenite or ZSM-5 zeolite, and the metal $M^2$ has been substituted by the metal $M^1$ in a substitution rate of not less than 30 %.

8. A methd of ozone decomposition which comprises
putting a gas which contains ozone therein into contact a catalyst which comprises:
a zeolite represented by the general formula (I)

$M_{X/n} \cdot [(AlO_2)_x \cdot (SiO_2)_Y] \cdot mH_2O$

wherein M is an alkali metal or an alkaline earth metal, and n is a valency of the metal M; and
a metal or a metal oxide of which oxide formation enthalpy $-\Delta H^\circ f$ is not more than 100 Kcal/g-atom of oxygen,
at temperatures of 0-40$^\circ$C.

9. The method as claimed in claim 8 wherein the gas is put into contact with the catalyst at an area velocity of 5-50 m³/m²·hr.

10. A methd of ozone decomposition which comprises
putting a gas which contains ozone therein into contact a catalyst which comprises:
a metal substituted zeolite represented by the general formula (II)

$M^1_{a/n}H_bM^2_{(X-(a/n)-b)} \cdot [(AlO_2)_x \cdot (SiO_2)_Y] \cdot mH_2O$

wherein $M^1$ is a metal of which oxide formation enthalpy $-\Delta H^\circ f$ is not more than 100 Kcal/g-atom of oxygen, $M^2$ is K or Na, and $0 \leqq b < X$,
at temperatures of 0-40$^\circ$C.

11. The method as claimed in claim 10 wherein the gas is put into contact with the catalyst at an area velocity of 5-50 m³/m²·hr.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 12, no. 209 (C-504)[3056], 15th June 1988; & JP-A-63 7844 (KUBOTA LTD) 13-01-1988 --- | | B 01 D 53/36 |
| A | CHEMICAL ABSTRACTS, vol. 90, no. 8, February 1979, page 344, abstract no. 60513n, Columbus, Ohio, US; & JP-A-78 108 893 (T. TAKEI) 22-09-1978 --- | | |
| A | CHEMICAL ABSTRACTS, vol. 110, no. 2, 9th January 1989, page 298, abstract no. 12939r, Columbus, Ohio, US; & JP-A-63 181 765 (TOKAI KOGYO CO., LTD) 26-07-1988 --- | | |
| A | EP-A-0 277 843 (UNION SHOWA K.K.) --- | | |
| A | EP-A-0 275 620 (NIPPON SHOKUBAI KAGAKU KOGYO CO., LTD) ----- | | |

TECHNICAL FIELDS SEARCHED (Int. Cl.5)

B 01 D 53/00
B 01 J 29/00

The present search report has been drawn up for all claims

| Place of search | Date of completion of the search | Examiner |
|---|---|---|
| THE HAGUE | 06-06-1990 | DEVISME F.R. |

EPO FORM 1503 03.82 (P0401)